(19) Europäisches Patentamt

European Patent Office

Office européen des brevets

(11) **EP 0 892 529 A2**

(12) **EUROPÄISCHE PATENTANMELDUNG**

(43) Veröffentlichungstag:
20.01.1999 Patentblatt 1999/03

(51) Int. Cl.⁶: **H04L 27/36**

(21) Anmeldenummer: 98103415.0

(22) Anmeldetag: 27.02.1998

(84) Benannte Vertragsstaaten:
**AT BE CH DE DK ES FI FR GB GR IE IT LI LU MC
NL PT SE**
Benannte Erstreckungsstaaten:
**AL LT LV MK RO SI**

(30) Priorität: **14.07.1997 DE 19730086**

(71) Anmelder: **ROBERT BOSCH GMBH
70442 Stuttgart (DE)**

(72) Erfinder: **Alberty, Michael
71522 Backnang (DE)**

(54) **Vorverzerrung in PSK-Sendern**

(57) Die Sendeeinrichtung ist nach dem LINC-Prinzip aufgebaut und besitzt zwei parallele Signalzweige mit jeweils einem Verstärker (V1, V2) und einem Phasenmodulator (PM1, PM2). Eine Weiche (WE) ist vorgesehen, die ein Eingangssignal (DI) auf die beiden Signalzweige aufteilt, und ein Kombinator (KB) addiert die Ausgangssignale (S11, S22) der beiden Signalzweige zu einem Summensignal (SS). Um Phasenfehler in den beiden Signalzweigen auszuregeln, ist die Weiche (WE) so ausgelegt, daß sie mit einer vorgebbaren Taktfrequenz (fc) die Zuteilung der Eingangssignal-Anteile (S1, S2) auf die beiden Signalzweige zyklisch vertauscht. Die durch die zyklische Vertauschung der Eingangssignal-Anteile (S1, S2) hervorgerufene Amplitudenmodulation des Summensignals (SS) wird detektiert und in Abhängigkeit davon die Phase in mindestens einem der Signalzweige so verändert, daß die Amplitudenmodulation minimal wird.

FIG. 2

## Beschreibung

Stand der Technik

Die vorliegende Erfindung betrifft eine Sendeeinrichtung für Hochfrequenzsignale, die zwei parallele Signalzweige aufweist mit jeweils einem Phasenmodulator und einem Verstärker, wobei eine Weiche vorgesehen ist, die ein Eingangssignal auf die beiden Signalzweige aufteilt, und ein Kombinator vorhanden ist, der die Ausgangssignale der beiden Signalzweige zu einem Summensignal zusammenfügt.

Mit dem wachsenden Einsatz von hochstufigen digitalen Modulationsverfahren (z.B. 64-QAM oder 256-QAM) in der Nachrichtenübertragung werden zunehmend höhere Anforderungen an die Linearität der Sendeverstärker gestellt. Bei heute üblichen Richtfunkgeräten werden die Sendeverstärker weit unterhalb ihrer Sättigungsleistung betrieben, um eine Degradation der Sendesignale durch nichtlineare Verzerrungen zu vermeiden. Der erforderliche Output-Back-Off (d.h. das Verhältnis von mittlerer Sendeleistung zur Sättigungsleistung) beträgt bei 64-QAM-Systemen zum Teil mehr als 9 dB. Da bei diesem System der Spitzenwert des Sendesignals um bis zu 9dB über dem Mittelwert liegt, ist über diesen Aussteuerbereich ein streng lineares Übertragungsverhalten des Sendeverstärkers erforderlich. Um das Übertragungsverhalten des Sendeverstärkers zu linearisieren, kann man einen Vorverzerrer einsetzen. Da aber in der Praxis eine völlige Linearisierung bis zur Sättigungsleistung mit vertretbarem Aufwand nicht erreichbar ist, muß ein weiterer Back-Off von einigen dB vorgesehen werden. Bedingt durch das ungünstige Verhältnis von mittlerer Sendeleistung zur Sättigungsleistung ergibt sich zwangsläufig ein nicht idealer Wirkungsgrad der Sendeeinrichtung. Dies führt neben einer erhöhten Verlustleistung des Senders auch zu entsprechend hohen Bauelemente- und damit Fertigungskosten.

Ein Verfahren, mit dem die Forderung nach linearem Übertragungsverhalten der Sendeeinrichtung bis zur Sättigung vermieden werden kann, ist in der Literatur unter dem Namen LINC (Linear Amplification with None Linear Components) bekannt. Eine solcher nach dem LINC-Prinzip linearisierter Sendeeinrichtung ist bekannt aus D.C. Cooks, "Linear Amplification with Nonlinear Components", IEEE-COM, December 1974, Seite 1942 bis 1945.

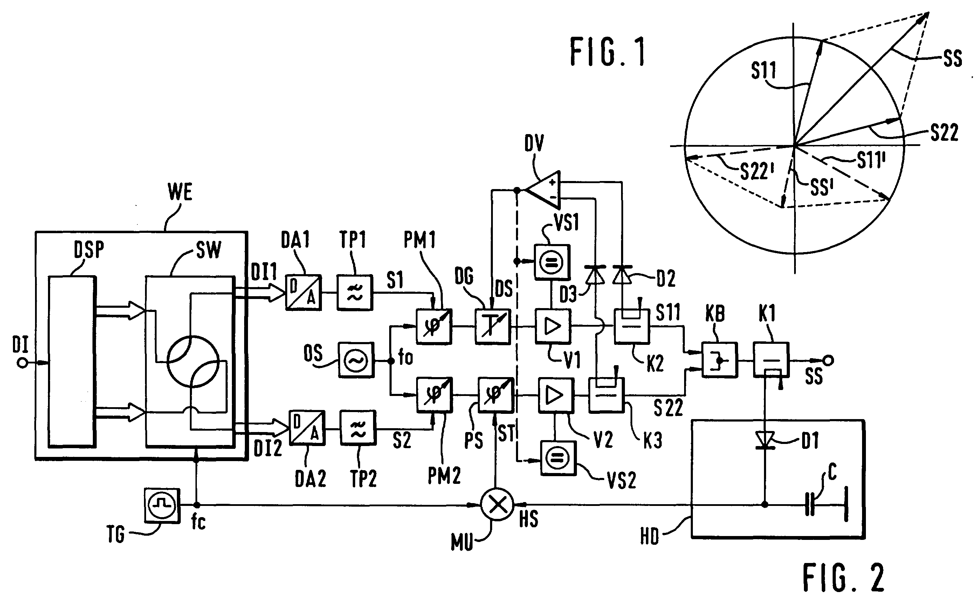

Wie einleitend dargelegt, weist eine nach dem LINC-Prinzip arbeitende Sendeeinrichtung zwei parallele Signalzweige auf mit jeweils einem Phasenmodulator und einem Verstärker. Eine eingangsseitige Weiche erzeugt aus dem Eingangssignal zwei Steuerspannungen für die beiden Phasenmodulatoren derart, daß sich in einem ausgangsseitigen Kombinator ein Summensignal mit der gewünschten Amplitude undPhase bildet. Das in der Figur 1 dargestellte Vektordiagramm zeigt beispielhaft die Bildung zweier Summensignale SS und SS'. Das Summensignal SS bzw. SS' entsteht durch die Addition der Ausgangssignale S11 und S22 bzw. S11' und S22' der beiden Signalzweige. Die beiden Ausgangssignale S11 und S22 bzw. S11' und S22' sind nur phasenmoduliert und beinhalten keine Amplitudenmodulation. Aus diesem Grund können sie mit zwei in Sättigung betriebenen Verstärkern in den beiden Signalzweigen auf den gewünschten Signalpegel gebracht werden, ohne daß Intermodulationsprodukte auftreten. Bei geeigneter Ansteuerung der Phasenmodulatoren in den beiden Signalzweigen können die Ausgangssignale S11 und S22 bzw. S11' und S22' in beliebige Phasenlagen gebracht werden, so daß ein Summensignal SS bzw. SS' mit beliebiger Phase und Amplitude realisiert werden kann.

Wie das Vektordiagramm in Figur 1 darstellt, sollten die Ausgangssignale S11 und S22 bzw. S11' und S22' gleiche Amplituden aufweisen. Bei einem Amplitudenfehler, also einer gegenseitigen Abweichung der Amplituden der beiden Ausgangssignale, kommt es z.B. bei einem 64-QAM-System zu einer Rotation der Signalzustände im zentralen Bereich des Signalzustandsdiagramms. Dagegen ist bei großen Amplituden der Ausgangssignale eine Dehnung des gesamten Gitters des Signalzustandsdiagramms zu beobachten. Bei einem Phasenfehler, also einer Abweichung der Phasen der beiden Ausgangssignale tritt vor allem eine Rotation der Signalzustände an den Eckpunkten und eine Dehnung oder Stauchung des Gitters im zentralen Bereich des Signalzustandsdiagramms auf. Will man eine Abweichung der Ist-Signalzustände von den Soll-Signalzuständen im Signalzustandsdiagramm von weniger als 1 % erreichen, dürfen Amplitudenfehler 0,1 dB und Phasenfehler 1 % nicht überschreiten. Diese Voraussetzungen sind mit der bekannten LINC-Sendeeinrichtung nicht zu erreichen, zumal die Phasenmodulatoren in den beiden Signalzweigen temperatur- und alterungsabhängige Phasengänge aufweisen. Aber auch alle anderen Bauelemente der Sendeeinrichtung weisen ein temperatur- und alterungsabhängiges Verhalten auf, das zu Amplituden- und Phasenfehlern führt.

Der Erfindung liegt daher die Aufgabe zugrunde, eine Sendeeinrichtung der eingangs genannten Art anzugeben, die ein Sendesignal erzeugt, das eine möglichst geringe Abweichung von einer Soll-Amplitude und Soll-Phase aufweist.

Vorteile der Erfindung

Die genannte Aufgabe wird mit den Merkmalen des Anspruchs 1 dadurch gelöst, daß die eingangsseitige Weiche so ausgelegt ist, daß sie mit einer vorgebbaren Taktfrequenz die Zuteilung der Eingangssignal-Anteile auf die beiden Signalzweige zyklisch vertauscht, und daß Mittel vorhanden sind, welche die durch die zyklische Vertauschung der Eingangssignal-Anteile hervorgerufene Amplitudenmodulation des Summensignals detektieren und in Abhängigkeit davon die Phase in mindestens einem der Signalzweige so verändern, daß die Amplitudenmodulation minimal wird. Durch diese Maßnahmen werden die Signalphasen in beiden Signalzweigen unabhängig von Temperaturvariationen, von Alterungserscheinungen und von Amplitudenfehlern.

Gemäß Unteransprüchen sind ein Hüllkurvendetektor, dem ein Teil des Summensignals zugeführt wird, und ein in einem Signalzweig eingefügter steuerbarer Phasenschieber vorgesehen. Das Steuersignal für die Phase in einem Signalzweig entsteht durch multiplikative Verknüpfung des Amplitudenmodulationssignals mit der Taktfrequenz für die Weiche.

Außerdem können Detektoren für die Amplituden der Ausgangssignale der beiden Signalzweige und Mittel vorgesehen werden, welche die Amplitudendifferenz der beiden Ausgangssignale ausregeln. Somit lassen sich Amplitudenfehler korrigieren. Die Mittel zum Ausregeln der Amplitudendifferenz können aus einem in mindestens einem der beiden Signalzweige angeordneten steuerbaren Dämpfungsglied bestehen. Die Mittel zum Ausregeln der Amplitudendifferenz können auch den Gleichspannungsarbeitspunkt mindestens einer der beiden Verstärker einstellen.

Es ist zweckmäßig, die Verstärker der beiden Signalzweige auf einem gemeinsamen Chip zu integrieren, womit beide Verstärker ein etwa gleiches Temperaturverhalten ihrer Verstärkungen aufweisen. Der Amplitudengleichlauf zwischen beiden Verstärkern wird dadurch verbessert.

Beschreibung eines Ausführungsbeispiels

Anhand eines in der Zeichnung dargestellten Ausführungsbeispiel wird nachfolgend die Erfindung näher erläutert. Es zeigen:

Figur 1 ein Vektordiagramm für das Ausgangssignal einer Sendeeinrichtung und
Figur 2 ein Blockschaltbild einer Sendeeinrichtung.

Das in der Figur 1 dargestellte Vektordiagramm, das die Funktionsweise einer nach dem LINC-Prinzip arbeitenden Sendeeinrichtung beschreibt, ist bereits in der Beschreibungseinleitung dargelegt worden.

Die Sendeeinrichtung in Figur 2 besteht aus zwei Signalzweigen, in denen jeweils ein Verstärker V1, V2 und ein Phasenmodulator PM1, PM2 angeordnet sind. Die beiden Verstärker V1 und V2 werden in oder zumindest nahe der Sättigung betrieben und verstärken die Signale in den beiden Signalzweigen auf eine möglichst gleiche Amplitude. Zwischen den Phasenmodulatoren PM1, PM2 und den Verstärkern V1, V2 kann eine Frequenzumsetzung vorgenommen werden. Zweckmäßigerweise sind die beiden Verstärker V1 und V2 auf einem gemeinsamen Chip integriert, damit beide ein möglichst gleiches temperaturabhängiges Verstärkungsverhalten zeigen.

Am Eingang der Sendeeinrichtung befindet sich eine Weiche WE, der ein digitales Eingangssignal DI zugeführt wird. Ein digitaler Signalprozessor DSP in der Weiche WE teilt das Eingangssignal in zwei Eingangssignalanteile DI1 und DI2 auf. Anstelle eines digitalen Signalprozessors kann auch ein ASIC mit sin-/cos-Tabellen eingesetzt werden. Anschließende Digital-Analog-Umsetzer DA1 und DA2 und darauf folgende Tiefpaßfilter TP1 und TP2 bilden zwei analoge Eingangssignalanteile S1 und S2, von denen jedes einem der beiden Phasenmodulatoren PM1 und PM2 in den beiden Signalzweigen zugeführt wird. Beide Phasenmodulatoren PM1 und PM2 erhalten von einem Trägerfrequenz-Oszillator OS ein Signal der Frequenz $f_0$. Der digitale Signalprozessor DSP leitet aus dem digitalen Eingangssignal DI solche digitalen Eingangssignal-Anteile DI1 und DI2 ab, welche gerade diejenigen Phasen für die Ausgangssignale S11 und S22 der beiden Signalzweige repräsentieren, die für die Bildung eines gewünschten Ausgangssignals SS der Sendeeinrichtung erforderlich sind. Die analogen Eingangssignal-Anteile S1 und S2 steuern also die beiden Phasenmodulatoren PM1 und PM2 so, daß die beiden Ausgangssignale S11 und S22 die für ein gewünschtes Ausgangssignal SS erforderlichen Phasenlagen aufweisen.

Da die Phasenmodulatoren PM1 und PM2 in der Praxis temperatur- und alterungabhängige Phasengänge aufweisen, werden folgende Maßnahmen ergriffen, um Phasenfehler auszuregeln. In der eingangsseitigen Weiche WE befindet sich ein Schalter SW, der von einer von einem Taktgenerator TG erzeugten Taktfrequenz fc gesteuert, die beiden Eingangssignal-Anteile S1 und S2 zyklisch zwischen den beiden Phasenmodulatoren PM1 und PM2 hin- und herschaltet. Sobald die von den Phasenmodulatoren PM1 und PM2 erzeugten Phasenlagen der Ausgangssignal-Anteile S11 und S22 von ihren Sollwerten abweichen, erfährt das Summensignal SS im Rhythmus der Taktfrequenz fc eine Rechteckamplitudenmodulation, deren Höhe dem Phasenfehler entspricht.

Von dem Summensignal SS wird mittels eines Kopplers K1 ein Anteil ausgekoppelt und einem Hüllkurvendetektor HD, bestehend aus einer Diode D1 und einem Kondensator C, zugeführt. Das Ausgangssignal HS des Hüllkurvendetektors HD ist ein Maß für die Amplitudenmodulation des Summensignals SS, die durch Phasenfehler hervorgerufen wird. In einem der beiden Signalzweige ist ein Phasenschieber PS eingefügt, dessen Phase nun so eingestellt wird, daß der Phasenfehler verschwindet. Ein Steuersignal ST für den Phasenschieber PS entspricht dem Hüllkurvensignal HS. Es ist zweckmäßig, als Steuersignal ST für den Phasenschieber PS das von einem Multiplizierer MU gebildete Produkt aus dem Hüllkurvensignal HS und der Taktfrequenz fc zu verwenden. Das Steuersignal ST erhält dadurch die richtige Polarität für die Nachführung des Phasenschiebers PS. Mit dieser Methode werden alle Phasenfehler, die durch Temperaturschwankungen, Alterungserscheinungen oder Amplitudenfehler hervorgerufen werden, ausgeregelt.

Sollten die Amplituden der Ausgangssignale S11 und S22 voneinander abweichen, also zusätzlich ein Amplitudenfehler vorliegen, so bietet sich folgende Maßnahme an. Von jedem Ausgangssignal S11 und S22 der beiden Signalzweige wird über Koppler K2 und K3 ein Signalanteil ausgekoppelt und mittels Dioden D2 und D3 gleichgerichtet. Man erhält damit ein Maß für die Amplituden der beiden Ausgangssignale S11 und S22. Ein Differenzverstärker DV ermittelt die Differenz zwischen den Amplituden der beiden Ausgangssignale S11 und S22. Diese Amplitudendifferenz wird als Steuersignal DS für ein in einem der beiden Signalzweige eingefügtes Dämpfungsglied DG herangezogen. Mit diesem steuerbaren Dämpfungsglied DG lassen sich die Amplituden der beiden Ausgangssignale S11 und S22 aneinander angleichen. Eine andere Möglichkeit, einen Amplitudenfehler auszuregeln, besteht darin, mit dem Ausgangssignal des Differenzverstärkers DV die Versorgungsspannungen VS1 und VS2 für die beiden Verstärker V1 und V2 so einzustellen, daß die Ausgangssignale der beiden Verstärker V1 und V2 gleiche Amplituden besitzen. Diese Gleichspannungsarbeitspunktregelung ist hinsichtlich des Wirkungsgrades des Sendeverstärkers günstiger als die Verwendung eines Dämpfungsgliedes.

Abweichend von dem vorangehend beschriebenen Ausführungsbeispiel können die Phasenmodulation, die Phase- und Amplitudeneinstellung durch einen digitalen Prozessor erfolgen.

**Patentansprüche**

1. Sendeeinrichtung für Hochfrequenzsignale, die zwei parallele Signalzweige aufweist, mit jeweils einem Phasenmodulator und einem Verstärker , wobei eine Weiche vorgesehen ist, die ein Eingangssignal auf die Signalzweige aufteilt, und ein Kombinator vorhanden ist, der die Ausgangssignale der beiden Signalzweige zu einem Summensignal zusammenfügt, dadurch gekennzeichnet, daß die Weiche (WE) so ausgelegt ist, daß sie mit einer vorgebbaren Taktfrequenz (fc) die Zuteilung der Eingangssignal-Anteile (S1, S2) auf die beiden Signalzweige zyklisch vertauscht und daß Mittel (HD, PS) vorhanden sind, welche die durch die zyklische Vertauschung der Eingangssignal-Anteile (S1, S2) hervorgerufene Amplitudenmodulation des Summensignals (SS) detektieren und in Abhängigkeit davon die Phase in mindestens einem der Signalzweige so verändern, daß die Amplitudenmodulation minimal wird.

2. Sendeeinrichtung nach Anspruch 1, dadurch gekennzeichnet, daß die Mittel aus einem Hüllkurvendetektor (HD), dem ein Teil des Summensignals (SS) zugeführt wird, und einem in einem Signalzweig eingefügten steuerbaren Phasenschieber (PS) bestehen.

3. Sendeeinrichtung nach Anspruch 1 oder 2, dadurch gekennzeichnet, daß ein Steuersignal (SD) für die Phase in einem Signalzweig durch multiplikative Verknüpfung des Amplitudenmodulationssignals (HS) mit der Taktfrequenz (fc) für die Weiche (WE) entsteht.

4. Sendeeinrichtung nach Anspruch 1, dadurch gekennzeichnet, daß Detektoren (D2, D3) für die Amplituden der Ausgangssignale (S11, S22) der beiden Signalzweige vorgesehen sind und daß Mittel (DV, DG) vorhanden sind, welche die Amplitudendifferenz ausregeln.

5. Sendeeinrichtung nach Anspruch 4, dadurch gekennzeichnet, daß die Mittel zum Ausregeln der Amplitudendifferenz aus einem in mindestens einem der beiden Signalzweige angeordneten steuerbaren Dämpfungsglied (DG) bestehen.

6. Sendeeinrichtung nach Anspruch 4, dadurch gekennzeichnet, daß die Mittel zum Ausregeln der Amplitudendifferenz den Gleichspannungsarbeitspunkt mindestens eines der beiden Verstärker (V1, V2) einstellen.

7. Sendeeinrichtung nach Anspruch 1, dadurch gekennzeichnet, daß die beiden Verstärker (V1, V2) gemeinsam auf einem Chip integriert sind.

FIG. 1

FIG. 2